# EUROPÄISCHE PATENTSCHRIFT

(11) **EP 4 416 487 B1**
(45) Veröffentlichungstag und Bekanntmachung des Hinweises auf die Patenterteilung: **02.07.2025**
(21) Anmeldenummer: 22786824.7
(22) Anmeldetag: 06.10.2022
(51) Int. Cl.: G01N 21/47, G01N 21/53, G01N 21/85

(54) **TRÜBHEITSSENSOR, INSBESONDERE ZUR ERMITTLUNG EINER ZELLDICHTE EINER SUSPENSION**
TURBIDITY SENSOR, IN PARTICULAR FOR DETERMINING A CELL DENSITY OF A SUSPENSION
CAPTEUR DE TURBIDITÉ, EN PARTICULIER POUR DÉTERMINER LA DENSITÉ CELLULAIRE D'UNE SUSPENSION

(30) Priorität: 12.10.2021 DE 102021126439
(43) Veröffentlichungstag der Anmeldung: 21.08.2024
(73) Patentinhaber: Hamilton Bonaduz AG, 7402 Bonaduz (CH)
(72) Erfinder: SCHÖNFUSS, Dirk, 7403 Rhäzüns (CH); WILLI, Louis, 7402 Bonaduz (CH); FISCH, Gabriela, 7000 Chur (CH); ÇELIK, Yavuz, 7403 Rhäzüns (CH); BRÉMAUD, David, 8707 Uetikon am See (CH)
(74) Vertreter: Ruttensperger Lachnit Trossin Gomoll
(86) Internationale Anmeldenummer: PCT/EP2022/077864
(87) Internationale Veröffentlichungsnummer: WO 2023/061857

(56) Entgegenhaltungen:
- CN-A- 110 646 379
- US-A- 4 263 511
- US-A1- 2019 360 930
- US-B2- 8 902 425

## Beschreibung

Die vorliegende Erfindung betrifft einen Trübheitssensor zur Erfassung einer Eintrübung eines Fluids durch im Fluid enthaltene Schwebstoffe, wobei der Trübheitssensor umfasst:
- einen Fluiderfassungsbereich zur Aufnahme und zur messtechnischen Erfassung von Fluid
- eine Strahlungsquelle zur Emission von Strahlung in den Fluiderfassungsbereich,
- einen ersten Strahlungssensor zur Erfassung eines ersten Teils der von der Strahlungsquelle emittierten Strahlung, und
- einen vom ersten Strahlungssensor verschiedenen zweiten Strahlungssensor zur Erfassung eines vom ersten Teil verschiedenen zweiten Teils der von der Strahlungsquelle emittierten Strahlung,
wobei sich wenigstens ein Abschnitt des Fluiderfassungsbereichs zwischen dem ersten und dem zweiten Strahlungssensor befindet.

Derartige Trübheitssensoren, wie auch der Trübheitssensor der vorliegenden Erfindung, werden unter anderem zur Ermittlung einer Zelldichte einer Suspension vermittels einer durch die suspendierten Zellen bewirkten Eintrübung des suspendierenden Fluids verwendet. Die Zellen bilden dann die oben genannten Schwebstoffe. Die genannte messtechnische Erfassung ist daher eine strahlungsmesstechnische Erfassung, welche die Eintrübung des Fluids auf Grundlage der von der Strahlungsquelle emittierten Strahlung ermittelt.

Trübheitssensoren der eingangs genannten Art kommen beispielsweise in Bioreaktoren und dergleichen zum Einsatz, wo Zellen, insbesondere lebende Zellen, in einer Flüssigkeit, wie etwa einer Nährlösung, vermehrt werden. Ein Trübheitssensor kann somit dazu herangezogen werden, den Erfolg einer Zellvermehrung in einem Bioreaktor zu ermitteln.

Ein Trübheitssensor mit den eingangs genannten Merkmalen ist aus der US 2019/0360930 A1 bekannt. Der bekannte Trübheitssensor umfasst in einer Ausführungsform eine Mehrzahl von Strahlungssensoren, nämlich genau drei. Die Strahlungssensoren und die Strahlungsquelle sind um den Fluiderfassungsbereich herum angeordnet. Ein erster Strahlungssensor befindet sich in gerader Linie der Strahlungsquelle gegenüber, sodass der von ihm erfasste Teil der von der Strahlungsquelle emittierten Strahlung ein Transmissionsanteil ist, welcher den ersten Strahlungssensor nach Durchgang durch den Fluiderfassungsbereich ohne Ablenkung erreicht.

Ein zweiter Strahlungssensor befindet sich auf derselben Seite des Fluiderfassungsbereichs wie die Strahlungsquelle, jedoch bezüglich der Strahlungsquelle in Umfangsrichtung um den Fluiderfassungsbereich versetzt. Dieser zweite Strahlungssensor erfasst einen zweiten Teil der von der Strahlungsquelle emittierten Strahlung, welcher von den im Fluid enthaltenen Schwebstoffen mit einer zur Einfallsrichtung der von der Strahlungsquelle emittierten Strahlung entgegengesetzten Strahlungskomponente gestreut wird.

Ein dritter Strahlungssensor befindet sich auf derselben Seite des Fluiderfassungsbereichs wie der erste Strahlungssensor, jedoch gegenüber diesem in Umfangsrichtung um den Fluiderfassungsbereich versetzt. Der dritte Strahlungssensor erfasst einen Teil der von der Strahlungsquelle emittierten Strahlung, welche beim Durchgang durch den Fluiderfassungsbereich von den im Fluid erhaltenen Schwebstoffen gestreut, also abgelenkt wird, wobei eine parallel zur Einfallsrichtung der emittierten Strahlung verlaufende Strahlungskomponente des den dritten Strahlungssensor erreichenden Teils der emittierten Strahlung mit der Einfallsrichtung gleichgerichtet ist. Die den dritten Strahlungssensor erreichende Strahlung ist weniger stark gestreut bzw. von der Einfallsrichtung abgelenkt wie die den zweiten Strahlungssensor erreichende Strahlung.

Die die einzelnen Strahlungssensoren erreichenden Strahlungsanteile verändern sich abhängig mit der Menge an, bezogen auf ein Bezugsvolumen des Fluids, im Fluid enthaltenen Schwebstoffen. Eine bezogen auf ein Bezugsvolumen des Fluids geringe Menge an Schwebstoffen verringert mit zunehmender Anzahl an Schwebstoffen den Anteil an vom ersten Strahlungssensor erfasster, den Fluiderfassungsbereich geradlinig transmittierender Strahlung, ohne zunächst den Anteil an vom zweiten und vom dritten Strahlungssensor erfasster gestreuter Strahlung in gleichem Maße zu erhöhen.

Eine bezogen auf das Bezugsvolumen des Fluids mittlere Menge an Schwebstoffen verringert den Anteil an den Fluiderfassungsbereich transmittierender Strahlung mit zunehmender Anzahl an Schwebstoffen weiter, und zwar in der Regel in einem mit der Anzahl an Schwebstoffen nichtlinearen Zusammenhang, wobei der Anteil an gestreuter und damit abgelenkter Strahlung ansteigt, welcher den dritten Strahlungssensor erreicht.

Eine bezogen auf das Bezugsvolumen des Fluids hohe Menge an Schwebstoffen verringert den Anteil an den Fluiderfassungsbereich transmittierender Strahlung weiter, erhöht jedoch mit zunehmender Anzahl an Schwebstoffen den Anteil an Strahlung, welche durch die Schwebstoffe mit einer entgegen der Einfallsrichtung gerichteten Strahlungskomponente gestreut wird und welche folglich vom zweiten Strahlungssensor erfasst wird.

Der bekannte Trübheitssensor gestattet somit einen großen Messbereich hinsichtlich der Menge an im Fluid enthaltenen Schwebstoffen. Allerdings erfordert der bekannte Trübheitssensor einen relativ großen Bauraum und eine relativ komplexe Ausgestaltung des Fluiderfassungsbereichs. Der Fluiderfassungsbereich ist von der Strahlungsquelle und von den Strahlungssensoren zu einem Gutteil umgeben und muss dennoch für zu erfassendes Fluid erreichbar sein.

Vorteilhaft schlanke Trübheitssensoren mit vergleichsweise geringem Bauraumbedarf sind beispielsweise aus der US 2010/0157304 A1, der EP 1 991 859 A, der EP 1 754 045 A1 und der US 7060979 B2 bekannt, wobei die verbesserte Bauraumausnutzung stets auf Kosten des verfügbaren Messbereichs im Hinblick auf die Menge an im Fluid enthaltenen Schwebstoffen geht, über welchen hinweg die Trübheitssensoren mit ausreichender Genauigkeit einsetzbar sind.

Es ist Aufgabe der vorliegenden Erfindung, einen Trübheitssensor der eingangs genannten Art so zu verbessern, dass bei möglichst geringem Bauraumbedarf die Trübung eines Fluids, bezogen auf ein Bezugsvolumen des Fluids, über einen möglichst großen Bereich an unterschiedlichen Mengen von im Fluid enthaltenen Schwebstoffen möglichst genau erfassbar ist.

Diese Aufgabe löst die vorliegende Erfindung mit einem Trübheitssensor gemäß Anspruch 1 dadurch, dass sich der zweite Strahlungssensor im Strahlengang des vom ersten Strahlungssensor erfassten ersten Teils der von der Strahlungsquelle emittierten Strahlung befindet. Somit können der erste und der zweite Strahlungssensor bezüglich der auf den ersten Strahlungssensor einfallenden Strahlung der Strahlungsquelle hintereinander angeordnet sein. Der zweite Strahlungssensor wird mit von der Strahlungsquelle emittierter Strahlung durchstrahlt. Eine aus dem Stand der Technik bekannte Anordnung des Strahlungssensors neben der Strahlungsquelle oder neben dem Fluiderfassungsbereich kann so vermieden werden, was die Bildung eines schlanken Trübheitssensors ermöglicht.

Gleichzeitig kann der zweite Strahlungssensor einen Strahlungsanteil erfassen, welcher von den im Fluiderfassungsbereich vorhandenen Schwebstoffen mit einer Strahlungskomponente gestreut bzw. reflektiert wird, welche der Einfallsrichtung der von der Strahlungsquelle in den Fluiderfassungsbereich emittierten Strahlung entgegengesetzt ist. Weiterhin kann der erste Strahlungssensor einen Strahlungsanteil erfassen, welche den Fluiderfassungsbereich ohne Ablenkung bzw., abhängig von der Größe der Sensorerfassungsfläche des ersten Strahlungssensors, mit geringem Ablenkwinkel transmittiert. Mit dem transmittierten Strahlungsanteil können selbst geringe Mengen an im Fluiderfassungsbereich vorhandenen Schwebstoffen mit guter Genauigkeit ermittelt werden. Mit dem mit Strahlungskomponente entgegen der Einfallsrichtung gestreuten Strahlungsanteil können große Mengen an im Fluiderfassungsbereich vorhandenen Schwebstoffen mit guter Genauigkeit ermittelt werden. Durch entsprechende Kalibration des Trübheitssensors können auch zwischen der geringen und der hohen Menge gelegene mittlere Mengen an Schwebstoffen mit guter Genauigkeit ermittelt werden.

Darüber hinaus kann mit dem vorliegend vorgestellten Trübheitssensor ein Erfassungssignal erhalten werden, dessen Abhängigkeit von der Menge an Schwebstoffen im zu erfassenden Fluid eine sehr gute Linearität aufweist. Dabei ist mit "Menge" stets eine auf ein Bezugsvolumen an Fluid bezogene Menge gemeint, um die Vergleichbarkeit von Erfassungsergebnissen sicherzustellen. Diese vorteilhaft hohe Linearität sorgt für eine einfache Signalverarbeitung von Erfassungssignalen des Trübheitssensors und damit für eine hohe Erfassungsgenauigkeit.

Grundsätzlich ist es nicht ausgeschlossen, dass der vorliegend vorgestellte Trübheitssensor einen oder mehrere weitere Strahlungssensoren umfasst. Zur Erzielung eines schlanken Trübheitssensors ist jedoch bevorzugt, dass der Trübheitssensor nur den ersten und den zweiten Strahlungssensor aufweist. Dies reicht aufgrund der beiden sich bevorzugt diametral über den Fluiderfassungsbereich hinweg gegenüberliegenden Strahlungssensoren auch zur Erzielung einer hohen Erfassungsgenauigkeit aus.

Das Fluid kann als Matrixfluid ein Gas oder eine Flüssigkeit sein, in welchem die Schwebstoffe aufgenommen sind. Die Schwebstoffe können Tröpfchen einer vom Matrixfluid verschiedenen weiteren Flüssigkeit sein, dann bilden das Fluid als Matrixfluid und die weitere Flüssigkeit eine Emulsion, oder/und können Festkörper sein, dann bilden das Fluid als Matrixfluid und die Festkörper eine Suspension. In einem bevorzugten Anwendungsfall des hier diskutierten Trübheitssensors sind die Schwebstoffe biologische Zellen, insbesondere lebende Zellen. Aber auch tote Zellen, die in der Regel unvermeidlich neben den lebenden Zellen in einem Bioreaktor existieren, sind durch den Trübheitssensor erfassbar.

Grundsätzlich kann mit jeder von der Strahlungsquelle emittierten elektromagnetischen Strahlung eine gute Messung mit aussagekräftigem Ergebnis durchgeführt werden. Bevorzugt wird elektromagnetische Strahlung mit einer Wellenlänge im Bereich des sichtbaren Lichts oder höher verwendet.

Beispielsweise liefert von der Strahlungsquelle emittierte Strahlung mit einer Wellenlänge von 590 nm oder höher bereits sehr aussagekräftige Ergebnisse. Zur Vermeidung von Störungen einer Trübungsmessung durch Strahlung oder Strahlungsanteile, welche aus anderen Quellen als der Strahlungsquelle stammt bzw. stammen, umfasst die von der Strahlungsquelle emittierte Strahlung bevorzugt Strahlung im Übergangsbereich zwischen sichtbarem Licht und Infrarot-Strahlung. Besonders bevorzugt umfasst die von der Strahlungsquelle emittierte Strahlung sogenannte "Nah-Infrarot-Strahlung" mit einer Wellenlänge im Bereich von 775 nm bis 3000 nm, wobei sich Strahlung mit einer Wellenlänge von 780 nm bis 900 nm, insbesondere mit einer Wellenlänge von 840 nm bis 865 nm, als besonders vorteilhaft für eine Trübheitsmessung, insbesondere verursacht von biologischen Zellen, erwiesen hat. In dem genannten Wellenlängenbereich ist der Trübheitssensor bezüglich Farbveränderungen des messtechnisch zu erfassenden Fluids unempfindlich, wobei für die Strahlung mit einer Wellenlänge von 840 nm bis 865 nm besonders leistungsfähige Strahlungssensoren verfügbar sind.

Eine bevorzugte Strahlungsquelle ist oder umfasst aufgrund ihrer geringen Baugröße wenigstens eine Leuchtdiode, wobei besonders bevorzugt die Leuchtdiode als sogenannte "Glas-LED" von einem Glaskörper umschlossen ist, da das Strahlungsemissionsverhalten einer Glas-LED eine besonders geringe Temperaturabhängigkeit zeigt. Andere Strahlungsquellen als LEDs sind ebenfalls einsetzbar. Zur Erzielung eines Trübheitssensors mit geringem Bauraumbedarf umfasst die Strahlungsquelle bevorzugt genau eine LED, wenngleich auch mehrere LEDs eingesetzt sein können.

Bevorzugt sind zur Erzielung eines möglichst schlanken Trübheitssensors die Strahlenquelle, der zweite Strahlungssensor, der Fluiderfassungsbereich und der erste Strahlungssensor - in der genannten Reihenfolge - hintereinander angeordnet, besonders bevorzugt längs einer Strahlungsemissionsrichtung der Strahlenquelle in gerader Linie hintereinander angeordnet.

Grundsätzlich kann der zweite Strahlungssensor wenigstens abschnittsweise aus einem für die von der Strahlenquelle emittierte Strahlung durchlässigen Material gebildet sein, etwa analog zu einem halbdurchlässigen Spiegel, mit dem Unterschied dass die für die emittierte Strahlung undurchlässigen Abschnitte des zweiten Strahlungssensors nicht notwendigerweise Spiegelflächen umfassen, sondern strahlungsempfindliche Erfassungsflächen.

Eine besonders effektive Transmission des zweiten Strahlungssensors durch von der Strahlungsquelle emittierte Strahlung kann dadurch erhalten werden, dass der zweite Strahlungssensor eine ihn durchsetzende Öffnung aufweist, durch welche hindurch von der Strahlungsquelle emittierte Strahlung im Wesentlichen ungehindert von der Strahlungsquelle zum ersten Strahlungssensor gelangt. Die Verwendung von strahlungsdurchlässigem Material zur Bildung des zweiten Strahlungssensors ist dann unnötig. Das Material des zweiten Strahlungssensors ist dann frei wählbar.

Die durchsetzende Öffnung ist bevorzugt eine einzige zusammenhängende Öffnung. Die durchsetzende Öffnung kann jedoch in unterschiedliche Teilöffnungen unterteilt sein, welche mit Abstand voneinander am zweiten Strahlungssensor ausgebildet sind. Bevorzugt ist die durchsetzende Öffnung eine Öffnung mit kreisrundem Querschnitt, um eine möglichst symmetrische Durchstrahlung des zweiten Strahlungssensors um eine von der Strahlungsquelle zum ersten Strahlungssensor führende optische Achse herum zu ermöglichen. Die optische Achse kann im Zweifel als der kürzeste Strahlungsweg von der Strahlungsquelle zum ersten Strahlungssensor angenommen werden. Es soll jedoch, wie oben bereits angedeutet wurde, nicht ausgeschlossen sein, dass die durchsetzende Öffnung eine gitterförmige Gestalt aufweist, unterbrochen durch strahlungsempfindliche Teilflächen des zweiten Strahlungssensors.

Grundsätzlich soll nicht ausgeschlossen sein, dass der erste oder/und der zweite Strahlungssensor eine gekrümmte strahlungsempfindliche Sensorerfassungsfläche aufweist bzw. aufweisen. Für eine möglichst kompakte Anordnung der Strahlungssensoren ist es jedoch vorteilhaft, wenn der erste Strahlungssensor eine ebene erste strahlungsempfindliche Sensorerfassungsfläche aufweist und wenn der zweite Strahlungssensor eine ebene zweite strahlungsempfindliche Sensorerfassungsfläche aufweist. Die strahlungsempfindlichen Sensorerfassungsflächen des ersten und des zweiten Strahlungssensors sind aufeinander zu weisend am Trübheitssensor angeordnet, d. h. ein von der jeweiligen Sensorerfassungsfläche ausgehender Normalenvektor hat in einem kartesischen Komponentensystem eine Vektorkomponente, welche zur jeweils anderen Sensorerfassungsfläche weist. Wiederum kann eine kompakte Anordnung der Strahlungssensoren mit möglichst effizienter Signalausbeute auch bei schwacher auf sie einfallender Strahlung dadurch erhalten werden, dass die erste und die zweite Sensorerfassungsfläche zueinander parallel angeordnet sind. Im letztgenannten bevorzugten Fall weisen die Normalenvektoren der beiden Sensorerfassungsflächen aufeinander zu, d. h. sie sind im Rahmen der üblichen Toleranzen bei Herstellung und Montage bevorzugt parallel und einander entgegengesetzt gerichtet.

Zur erleichterten Anordnung eines definierten Fluiderfassungsbereichs in einem durch den Trübheitssensor zu erfassenden Fluid sind gemäß einer bevorzugten Weiterbildung der vorliegenden Erfindung die Strahlungsquelle, der erste Strahlungssensor und der zweite Strahlungssensor in einem Sensorgehäuse aufgenommen. Dadurch sind die genannten Bauteile des Trübheitssensors gemeinsam verlagerbar. Überdies sind der erste Strahlungssensor und der zweite Strahlungssensor, bevorzugt auch die Strahlungsquelle, in dem Sensorgehäuse bevorzugt relativ zueinander unbeweglich angeordnet, sodass ihre gemeinsame Verlagerung mittels Verlagerung des Sensorgehäuses keinen Einfluss auf die mit dem Trübheitssensor erzielbare Messgenauigkeit hat.

Zum Schutz vor äußeren Einflüssen, insbesondere vor dem messtechnisch zu erfassenden Fluid sind die genannten Bauteile des Trübheitssensors bevorzugt durch das Sensorgehäuse gegenüber der Außenumgebung des Sensorgehäuses abgeschirmt. In der Außenumgebung befindet sich in der Regel das messtechnisch zu erfassende Fluid mit den darin erwarteten Schwebstoffen. Bevorzugt ist daher der Fluiderfassungsbereich zur Außenumgebung des Sensorgehäuses offen, beispielsweise in Gestalt einer das Sensorgehäuse durchsetzenden Fluidleitung. Besonders bevorzugt ist der Fluiderfassungsbereich ein Abschnitt der Außenumgebung des Sensorgehäuses, welche bezüglich der übrigen Außenumgebung lediglich eine relativ zum Sensorgehäuse ausgezeichnete Lage aufweist, beispielsweise in Gestalt eines Nutvolumens einer am Sensorgehäuse ausgebildeten Nut. Die Nut kann von Außenflächenabschnitten des Sensorgehäuses begrenzt sein und von von der Strahlungsquelle emittierter Strahlung durchstrahlbar sein.

Bevorzugt ist das Sensorgehäuse wenigstens abschnittsweise aus einem Metall, insbesondere aus nicht-rostendem Stahl gebildet, sodass es chemisch besonders widerstandsfähig gegen äußere Einflüsse ist. Dabei können Abschnitte des Sensorgehäuses reflektierend wirken und von der Strahlungsquelle in den Fluiderfassungsbereich emittierte Strahlung unerwünschterweise zum zweiten Strahlungssensor hin reflektieren. Der zweite Strahlungssensor erfasst diese reflektierte Strahlung. Grundsätzlich kann dieser vom Sensorgehäuse reflektierte Strahlungsanteil durch entsprechende Kalibration aus dem vom zweiten Strahlungssensor insgesamt erfassten Strahlungsanteil herausgerechnet werden, um den von den Schwebstoffen gestreuten bzw. reflektierten Nutzstrahlungsanteil als Information über die Trübheit des Fluids zu ermitteln. Vorteilhafter ist jedoch, wenn dieser vom Sensorgehäuse reflektierte Strahlungsanteil als in den zweiten Strahlungssensor einstrahlende Fehlstrahlung mengenmäßig so gering wie möglich ist. Daher ist gemäß einer bevorzugten Weiterbildung der vorliegenden Erfindung vorgesehen, dass wenigstens ein zum zweiten Strahlungssensor weisender Abschnitt des Sensorgehäuses zur Veränderung, insbesondere zur Reduzierung, seiner Reflexionseigenschaft im Wellenlängenbereich der von der Strahlungsquelle emittierten Strahlung oberflächenbearbeitet ist. Die Oberflächenbearbeitung kann in der Bildung von makroskopischen Facettenflächen liegen, etwa durch entsprechende spanende Bearbeitung. Die Facettenflächen können so ausgerichtet sein, dass von der Strahlungsquelle emittierte Strahlung, welche auf die Facettenflächen trifft, durch die Facettenflächen vom zweiten Strahlungssensor weg und bevorzugt auch vom Fluiderfassungsbereich weg reflektiert wird.

Zusätzlich oder alternativ kann die Oberflächenbearbeitung in der Erhöhung der Rauigkeit von Oberflächenabschnitten des Sensorgehäuses resultieren, sodass ein entsprechend rauer bzw. aufgerauter Oberflächenabschnitt weniger Strahlung reflektiert als ein gleich großer glatter bzw. metallisch blanker Oberflächenabschnitt.

Zusätzlich oder alternativ kann die Oberflächenbearbeitung eine Oberflächenbeschichtung sein mit einem im Wellenlängenbereich der von der Strahlungsquelle emittierten Strahlung absorbierenden Material. Eine solche Oberflächenbeschichtung kann beispielsweise durch Auftrag eines Lacks realisiert sein.

Vorteilhafterweise kann am Trübheitssensor ursprünglich von der Strahlungsquelle emittierte Strahlung, nachdem sie den Fluiderfassungsbereich erreicht hat, ausgehend vom Fluiderfassungsbereich zu den Strahlungssensoren gelangen, ohne dass die Strahlungssensoren durch das im Fluiderfassungsbereich vorhandene Fluid belastet werden. Zu diesem Zweck kann das Sensorgehäuse eine erste und eine zweite Scheibe aufweisen, welche jeweils Strahlung der Strahlungsquelle durchlassen. Bevorzugt liegt der Fluiderfassungsbereich räumlich zwischen der ersten und der zweiten Scheibe. Die erste Scheibe kann bevorzugt den ersten Strahlungssensor und die zweite Scheibe kann bevorzugt den zweiten Strahlungssensor gegenüber dem Fluiderfassungsbereich abschirmen. Die erste und die zweite Scheibe sind für eine kompakte Bauform bevorzugt mit Abstand voneinander einander gegenüberliegend im Strahlengang der Strahlungsquelle gelegen.

Mechanisch und auch chemisch besonders widerstandsfähige Scheiben können dadurch erhalten werden, dass die erste oder/und die zweite Scheibe aus mineralischem Material gebildet ist bzw. sind, beispielsweise aus einem Korund. Ein als Scheibenmaterial besonders bevorzugtes Material ist Saphirglas, also Aluminiumoxid. Saphirglas ist hart und extrem kratzfest sowie chemisch beständig.

Bevorzugt ist die erste oder/und die zweite Scheibe, insbesondere dann, wenn sie aus mineralischem Material gebildet ist, durch einen schmelzbaren Kitt mit dem Sensorgehäuse verbunden. Der schmelzbare Kitt benetzt dabei im geschmolzenen, fließfähigen Zustand sowohl die erste oder/und die zweite Scheibe als auch einen die erste oder/und die zweite Scheibe umgebenden Abschnitt des Sensorgehäuses und erstarrt dann. Der Schmelzpunkt des Kitts ist dabei so hoch gewählt, dass er deutlich höher ist als die im herkömmlichen bestimmungsgemäßen Messbetrieb auftretenden Umgebungstemperaturen, etwa des zu erfassenden Fluids, aber niedriger ist als der niedrigere Schmelzpunkt aus dem Schmelzpunkt des Materials des Sensorgehäuses und dem Schmelzpunkt des Materials der durch den Kitt festgelegten Scheibe.

Um den ersten Strahlungssensor relativ zur Scheibe eindeutig mit einfachen Mitteln im Sensorgehäuse anzuordnen, kann der erste Strahlungssensor in Richtung zur ersten Scheibe hin durch eine erste Vorspannkraft vorgespannt sein. Zusätzlich oder alternativ kann aus demselben Grund der zweite Strahlungssensor in Richtung zur zweiten Scheibe hin durch eine zweite Vorspannkraft vorgespannt sein.

Zwischen einem Strahlungssensor und der ihn gegenüber dem Fluiderfassungsbereich abschirmenden Scheibe kann zur Vermeidung eines Einfalls von aus anderer Quelle als der Strahlungsquelle stammender Störstrahlung unerwünschter Wellenlänge auf dem Strahlungssensor ein optischer Filter angeordnet sein, welcher elektromagnetische Strahlung in einem vorbestimmten Wellenlängenbereich durchlässt und außerhalb dieses Wellenlängenbereichs nicht durchlässt. In der Praxis hat sich ein Tageslichtfilter als der genannte optische Filter bewährt. Der Tageslichtfilter blockiert Licht im optisch wahrnehmbaren Wellenlängenbereich und erlaubt den Durchgang von elektromagnetischer Strahlung größerer Wellenlänge. Bevorzugt ist der zwischen dem Strahlungssensor und der Scheibe angeordnete optische Filter ein Filter, welcher elektromagnetische Strahlung im Wellenlängenbereich von mehr als 750 nm, insbesondere von mehr als 800, noch stärker bevorzugt von mehr als 840 nm durchlässt und ansonsten elektromagnetische Strahlung mit kürzeren Wellenlängen, insbesondere im Wellenlängenbereich von sichtbarem Licht, blockiert. Dies gilt für den ersten oder/und den zweiten Strahlungssensor und der den jeweiligen Strahlungssensor abschirmenden Scheibe.

Gemäß einer bevorzugten konstruktiven Weiterbildung der vorliegenden Erfindung kann der erste Strahlungssensor in einer ersten Strahlungssensorbaugruppe aufgenommen sein. Die erste Strahlungssensorbaugruppe kann ein erstes Halterungsbauteil sein bzw. umfassen. Ein solches Halterungsbauteil kann derart ausgestaltet sein, dass es einerseits den ersten Strahlungssensor dauerhaft haltert, in der Regel unter Zwischenanordnung einer den ersten Strahlungssensor unmittelbar tragenden ersten Leiterplatte, und andererseits mit geringen Spaltmaßen, etwa mit einer Spielpassung, im Sensorgehäuse angeordnet werden kann. Die erste Strahlungssensorbaugruppe ist bevorzugt gegen ein erstes Gehäusebauteil des Sensorgehäuses durch ein erstes Dichtungsbauteil abgedichtet. Diese Abdichtung liegt bevorzugt auf der von der ersten Scheibe weg weisenden Seite der ersten Strahlungssensorbaugruppe, da die erste Strahlungssensorbaugruppe in entgegengesetzter Richtung eben durch jene erste Scheibe gegen Fluid aus der Außenumgebung, insbesondere aus dem Fluiderfassungsbereich, abgeschirmt ist. Das erste Gehäusebauteil kann ein Gehäusedeckel oder ein Gehäusestopfen sein, welcher eine, bevorzugt endseitige, Öffnung des Sensorgehäuses verschließt. Zur erleichterten Montage des Trübungssensors verschließt das erste Gehäusebauteil jene Öffnung des Sensorgehäuses, durch welche hindurch die erste Strahlungssensorbaugruppe in das Sensorgehäuse eingeführt wurde. Die erste Strahlungssensorbaugruppe befindet sich dann bevorzugt zwischen der ersten Scheibe und dem ersten Gehäusebauteil.

Grundsätzlich kann ein gesondertes Vorspannmittel, wie etwa eine Druckfeder, ein Elastomerring oder dergleichen, zwischen dem ersten Gehäusebauteil und der ersten Strahlungssensorbaugruppe angeordnet sein, um die oben genannte erste Vorspannkraft auf die erste Strahlungssensorbaugruppe auszuüben. Zur Vermeidung einer unnötig hohen Bauteileanzahl bewirkt bevorzugt das erste Dichtungsbauteil die erste Vorspannkraft. Das erste Dichtungsbauteil ist daher bevorzugt ein Dichtungsbauteil aus einem elastomeren Material, wie etwa ein O-Ring.

Was für den ersten Strahlungssensor gilt, gilt alternativ oder zusätzlich mutatis mutandis bevorzugt auch für den zweiten Strahlungssensor mit der Maßgabe, dass die Spezifikation "erste" durch "zweite" zu ersetzen ist. Daher kann bevorzugt der zweite Strahlungssensor in einer zweiten Strahlungssensorbaugruppe aufgenommen sein, wobei die zweite Strahlungssensorbaugruppe gegen ein zweites Gehäusebauteil des Sensorgehäuses durch ein zweites Dichtungsbauteil abgedichtet sein kann. Die zweite Strahlungssensorbaugruppe kann ein zweites Halterungsbauteil sein bzw. umfassen. Das zweite Halterungsbauteil kann derart ausgestaltet sein, dass es einerseits den zweiten Strahlungssensor dauerhaft haltert, in der Regel unter Zwischenanordnung einer den zweiten Strahlungssensor unmittelbar tragenden zweiten Leiterplatte, und andererseits mit geringen Spaltmaßen, etwa mit einer Spielpassung, im Sensorgehäuse angeordnet werden kann. Bevorzugt bewirkt hier das zweite Dichtungsbauteil die zweite Vorspannkraft, wenngleich ganz allgemein ein Vorspannbauteil, wie eine Druckfeder, ein Elastomerring oder dergleichen, vorgesehen sein kann, um die Vorspannkraft zu bewirken.

Auch das zweite Gehäusebauteil ist bevorzugt in eine Öffnung des Sensorgehäuses eingeführt, durch welche hindurch zuvor die zweite Strahlungssensorbaugruppe in das Sensorgehäuse eingeführt wurde. Bevorzugt umfasst das zweite Gehäusebauteil eine Elektronikbaugruppe, beispielsweise eine Basis-Leiterplatte mit elektronischen Bauteilen, wie etwa mit wenigstens einem integrierten Schaltkreis, welche zur Verarbeitung von Signalen des ersten und des zweiten Strahlungssensors ausgebildet ist.

Der die erste Strahlungssensorbaugruppe aufnehmende Teil des Sensorgehäuses kann mit dem ersten Gehäusebauteil stoffschlüssig verbunden sein, etwa durch Kleben oder Schweißen, insbesondere durch Laserschweißen. Ebenso kann der die zweite Strahlungssensorbaugruppe aufnehmende Teil des Sensorgehäuses mit dem zweiten Gehäusebauteil stoffschlüssig verbunden sein, wiederum beispielsweise durch Kleben oder Schweißen, bevorzugt durch Laserschweißen.

Bevorzugt sind die erste und die zweite Strahlungssensorbaugruppe im selben Teil des Sensorgehäuses aufgenommen, welches vorzugsweise als einstückiges Sensorgehäuseteil ausgebildet ist, in welchem auch die erste oder/und die zweite Scheibe aufgenommen ist bzw. sind.

Das zweite Dichtungsbauteil ist bevorzugt eine elastomere Dichtung, insbesondere ein O-Ring. Zur Vermeidung einer gesonderten Halterung für die Strahlungsquelle kann in der zweiten Strahlungssensorbaugruppe auch die Strahlungsquelle aufgenommen sein. Bevorzugt sind die zweite Sensoranordnung und die Strahlungsquelle an einem einstückig ausgebildeten zweiten Halterungsbauteil gehaltert.

Zur Festlegung der Strahlungsquelle in der zweiten Strahlungssensorbaugruppe kann die Strahlungsquelle mit dem zweiten Vorspannbauteil, insbesondere mit dem zweiten Dichtungsbauteil, in Anlageeingriff sein, so dass das zweite Vorspannbauteil, insbesondere das zweite Dichtungsbauteil, unmittelbar die Strahlungsquelle in Richtung zur zweiten Scheibe hin vorspannt. Das zweite Vorspannbauteil, insbesondere das zweite Dichtungsbauteil, kann somit eine zur zweiten Scheibe hin gerichtete Vorspannkraft sowohl unmittelbar auf die Strahlungsquelle ausüben als auch mittelbar über das zweite Halterungsbauteil auf den zweiten Strahlungssensor ausüben. Das zweite Halterungsbauteil ist dann zwischen dem zweiten Strahlungssensor und dem zweiten Vorspannbauteil, insbesondere dem zweiten Dichtungsbauteil, angeordnet.

Die vorliegend diskutierte Ausgestaltung des Trübheitssensors ermöglicht die Verwendung eines vorteilhaft schlanken Sensorgehäuses. Das Sensorgehäuse kann sich daher mit seiner größten Abmessung längs einer Längsachse erstrecken. Bevorzugt ist das Sensorgehäuse wenigstens abschnittsweise zylindrisch, insbesondere dort wo der erste und der zweite Strahlungssensor und besonders bevorzugt auch die Strahlungsquelle angeordnet sind. Die genannte Längsachse ist dann bevorzugt die Zylinderachse oder bei abschnittsweiser konischer Ausgestaltung die Konusachse. Anstelle eines zylindrischen Sensorgehäuses kann auch ein wenigstens abschnittsweise prismatisches Sensorgehäuse verwendet werden.

Die erste und die zweite Scheibe können jeweils quer zur Längsachse orientiert am Gehäuse aufgenommen sein. Der Fluiderfassungsbereich kann dann als quer zur Längsachse verlaufende Nut im Sensorgehäuse ausgebildet sein. Bevorzugt sind die erste und die zweite Scheibe orthogonal zur Längsachse orientiert. Ebenso verläuft bevorzugt eine Längserstreckungsrichtung der den Fluiderfassungsbereich bildenden Nut orthogonal zur Längsachse des Sensorgehäuses.

Die Emissionscharakteristerik der Strahlungsquelle, insbesondere in bevorzugter Gestalt einer LED, kann alterungsbedingten Änderungen unterliegen. Zusätzlich oder alternativ kann die Erfassungscharakteristik wenigstens eines Strahlungssensors alterungsbedingten Änderungen unterliegen.

Um auf derartige Änderungen der Emissionscharakteristerik oder/und der Erfassungscharakteristik reagieren zu können und einen Genauigkeitsverlust des Trübheitssensors zu vermeiden, betrifft die vorliegende Erfindung eine Trübheitssensorbaugruppe, welche einen zuvor beschriebenen Trübheitssensor und einen ersten Kalibrationskörper zur Korrektur bzw. Kalibration des Trübheitssensors umfasst.

Der erste Kalibrationskörper dient bevorzugt zur Korrektur bzw. Kalibration des ersten Strahlungssensors, welcher von den Fluiderfassungsbereich transmittierender Strahlung erreicht wird. Zur schnellen und unkomplizierten, aber gleichzeitig sicheren Anordnung des ersten Kalibrationskörpers ist dieser bevorzugt lösbar mit dem Sensorgehäuse verbindbar. Er kann als sich längs einer Hülsenachse erstreckenden Hülse, insbesondere einer topfartigen Hülse mit Boden und einer davon längs der Hülsenachse abstehenden, geschlossen um die Hülsenachse umlaufenden Seitenwand, längs der Längsachse des Sensorgehäuses auf dieses aufgeschoben werden. Die Hülsenachse ist im am Sensorgehäuse angeordneten Zustand parallel oder kollinear zur Längsachse des Sensorgehäuses.

Zur erleichterten Anordnung kann der als topfartige Hülse ausgestaltete erste Kalibrationskörper einen die Hülse durchsetzenden Kanal aufweisen, durch welchen beim Anordnen des ersten Kalibrationskörpers am Trübheitssensor zwischen dem ersten Kalibrationskörpers und dem Trübheitssensor eingeschlossene Luft entweichen kann. Bevorzugt ist der Kanal im Boden des topfartigen ersten Kalibrationskörpers ausgebildet, da erstens aus einem derart angeordneten Kanal kein störender Lichteinfall in den Fluiderfassungsbereich zu befürchten ist und zweitens der Kanal bis zur vollständigen Anordnung des ersten Kalibrationskörpers am Trübheitssensor für ein Entweichen von Luft zur Verfügung steht. Gleiches gilt im Übrigen beim Abziehen des ersten Kalibrationskörpers vom Trübheitssensor. Hier ist es vorteilhaft, wenn Luft in den zwischen dem ersten Kalibrationskörper und dem Trübheitssensor gebildeten und durch das Abziehen größer werdenden Raum einströmen kann. Dann muss das Abziehen nicht gegen die Wirkung der Umgebungsatmosphäre erfolgen, sondern nur gegen die Reibung zwischen dem ersten Kalibrationskörper und dem Trübheitssensor.

Alternativ kann der erste Kalibrationskörper als eine das Sensorgehäuse in Umfangsrichtung um dessen Längsachse unvollständig umgreifende elastische Klammer quer zur Längsachse des Sensorgehäuses auf dieses aufgeclipst, also an diesem klemmend verrastet werden.

Dann, wenn der erste Kalibrationskörper derart am Sensorgehäuse angeordnet ist, dass ein Lichteinfall aus der Außenumgebung in den Fluiderfassungsbereich nicht mehr möglich ist, ist ein erster kalibrationsbereiter Betriebszustand der Trübheitssensorbaugruppe erreicht. In diesem ersten kalibrationsbereiten Betriebszustand trägt der erste Kalibrationskörper zur Abschirmung des Fluiderfassungsbereichs gegen Einstrahlung von elektromagnetischer Strahlung eines bestimmten Wellenlängenbereichs, insbesondere gegen Lichteinstrahlung einschließlich Infrarot- und UV-Licht, aus der Außenumgebung wenigstens bei. Der Fluiderfassungsbereich kann dann zu einem Teil vom Sensorgehäuse und zu einem weiteren Teil vom ersten Kalibrationskörper umgeben sein, um die Abschirmung des Fluiderfassungsbereichs gegen die oben genannte Einstrahlung aus der Außenumgebung zu bewirken. Der erste Strahlungssensor ist folglich im ersten kalibrationsbereiten Betriebszustand für Umgebungslicht bzw. elektromagnetische Strahlung aus der Umgebung nicht mehr erreichbar, bleibt jedoch für von der Strahlungsquelle emittierte Strahlung erreichbar. Somit kann das Signal des ersten Strahlungssensors bezüglich einer Änderung der Emissionscharakteristik der Strahlenquelle oder/und einer Änderung der Erfassungscharakteristik des ersten Strahlungssensors korrigiert bzw. kalibriert werden.

Die mögliche zeitliche Änderung der Emissionscharakteristik der Strahlungsquelle oder/und eines Strahlungssensors verändert nicht nur das vom ersten Strahlungssensor bei Bestrahlung durch die Strahlungsquelle gelieferte Signal, sondern auch das vom zweiten Strahlungssensor gelieferte Signal. Daher ist eine entsprechende Korrektur des Signals des zweiten Strahlungssensors zur Anpassung an eine veränderte Emissionscharakteristik oder/und an eine Änderung der Erfassungscharakteristik des zweiten Strahlungssensors für die mit dem Trübheitssensor erzielbare Genauigkeit hilfreich.

Zusätzlich oder alternativ betrifft die vorliegende Erfindung daher eine Trübheitssensorbaugruppe, welche einen zuvor beschriebenen Trübheitssensor und einen zweiten Kalibrationskörper zur Kalibration des Trübheitssensors umfasst.

Der zweite Kalibrationskörper dient der Kalibration des zweiten Strahlungssensors. Der zweite Kalibrationskörper sorgt daher dafür, dass den zweiten Strahlungssensor nur Strahlung aus dem Fluiderfassungsbereich, nicht jedoch vom Sensorgehäuse oder von der ersten Scheibe reflektierte Strahlung oder Strahlung aus der Außenumgebung erreicht.

Bevorzugt ist der zweite Kalibrationskörper zur schnellen, auch kurzfristigen, und gleichzeitig sicheren Anwendung lösbar mit dem Sensorgehäuse verbindbar. Vorzugsweise ist der zweite Kalibrationskörper quer zur Längsachse des Sensorgehäuses auf dieses ausschiebbar. Damit der zweite Kalibrationskörper nicht dauerhaft während der Kalibration des zweiten Strahlungssensors am Sensorgehäuse gehalten werden muss, ist der zweite Kalibrationskörper bevorzugt am Sensorgehäuse verrastbar, etwa indem der zweite Kalibrationskörper das Sensorgehäuse in Umfangsrichtung um dessen Längsachse unvollständig umgreift. Der zweite Kalibrationskörper kann daher wenigstens abschnittsweise als Klammer ausgebildet sein, welche quer zur Längsachse des Sensorgehäuses auf das Sensorgehäuse aufclipsbar ist.

In einem zweiten kalibrationsbereiten Betriebszustand der Trübheitssensorbaugruppe schirmt der zweite Kalibrationskörper den Fluiderfassungsbereich vor einer Lichteinstrahlung bzw. allgemein vor einer Einstrahlung elektromagnetischer Strahlung eines bestimmten Wellenlängenbereichs aus der Außenumgebung ab. Es gilt diesbezüglich das zum ersten Kalibrationskörper Gesagte auch für den zweiten Kalibrationskörper. Der Fluiderfassungsbereich ist in diesem zweiten kalibrationsbereiten Betriebszustand bevorzugt vom Sensorgehäuse und vom zweiten Kalibrationskörper umgeben. Diese können dann die Abschirmung bewirken.

Um eine Reflexion von von der Strahlungsquelle emittierter Strahlung durch das Sensorgehäuse oder/und durch die erste Scheibe weitestgehend zu vermeiden, weist der zweite Kalibrationskörper bevorzugt eine Blockadeformation auf, welche im zweiten kalibrationsbereiten Betriebszustand zwischen dem ersten und dem zweiten Strahlungssensor angeordnet ist und den ersten Strahlungssensor gegenüber von der Strahlungsquelle emittierter Strahlung abschirmt. Bevorzugt befindet sich die Blockadeformation im zweiten kalibrationsbereiten Betriebszustand zwischen der Strahlungsquelle und der ersten Scheibe, insbesondere zwischen dem zweiten Strahlungssensor und der ersten Scheibe.

Die Blockadeformation ist vorzugsweise fest mit einem Festlegeabschnitt des zweiten Kalibrationskörper verbunden, mit welchem der zweite Kalibrationskörper am Sensorgehäuse festgelegt werden kann, insbesondere in der oben genannten Art und Weise festgelegt werden kann. Die Blockadeformation kann einstückig mit dem Festlegeabschnitt ausgebildet sein, beispielsweise durch Spritzguss. Die Blockadeformation kann alternativ eine Halterung umfassen, in welche ein Blockadekörper einsetzbar ist. Auf diese Weise können unterschiedliche Blockadekörper am zweiten Kalibrationskörper angeordnet und somit der zweite Kalibrationskörper an unterschiedliche Situationen angepasst werden.

Die vorliegende Erfindung wird nachfolgend anhand der beiliegenden Zeichnungen näher erläutert werden. Es stellt dar:
- Fig. 1: einen grobschematischen Längsschnitt durch das Erfassungsende eines erfindungsgemäßen Trübheitssensors,
- Fig. 2: eine grobschematische perspektivische Teilschnittansicht des Erfassungsendes des Trübheitssensors von Fig. 1,
- Fig. 3: einen grobschematischen Längsschnitt durch das Erfassungsende des Trübheitssensors von Fig. 1 mit daran kalibrationsbereit angebrachtem ersten Kalibrationskörper, und
- Fig. 4: einen grobschematischen Längsschnitt durch das Erfassungsende des Trübheitssensors von Fig. 1 mit daran kalibrationsbereit angebrachtem zweiten Kalibrationskörper.

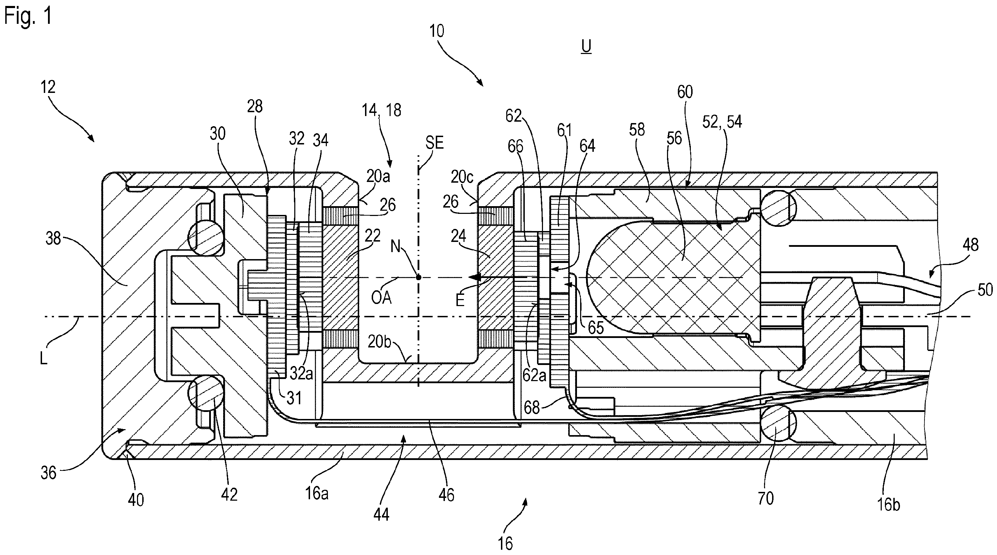

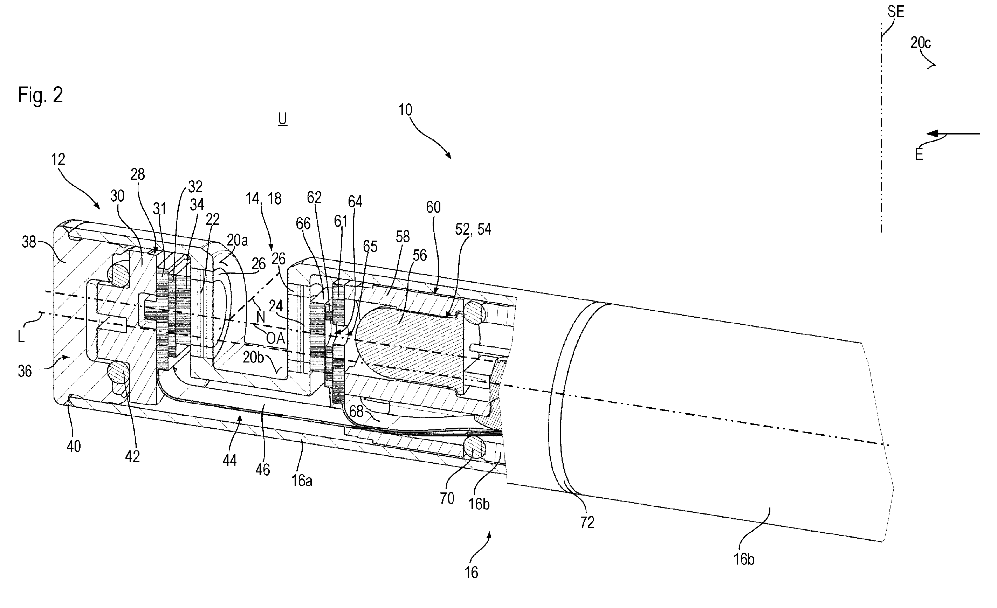

In den Figuren 1 und 2 ist ein erfindungsgemäßer Trübheitssensor allgemein mit 10 bezeichnet. Konkret dargestellt ist in den Figuren 1 und 2 das Erfassungsende 12 des Trübheitssensors 10, an welchem der Fluiderfassungsbereich 14 ausgebildet ist. Mit diesem Erfassungsende 12 wird der Trübheitssensor 10 im Erfassungsbetrieb in ein Fluid, in der Regel eine Flüssigkeit, eingetaucht, um deren Trübheit zu messen. Das Fluid enthält erwartungsgemäß Schwebstoffe, insbesondere biologische Zellen.

An einem in den Figuren nicht dargestellten, dem Erfassungsende 12 bezüglich einer Längsachse L entgegengesetzten Anschlussende kann der Trübheitssensor zur Übertragung von Erfassungsdaten ausgebildet sein, beispielsweise durch ein vom Anschlussende ausgehendes Anschlusskabel oder durch eine Anschlussschnittstelle, etwa eine Buchse, welche zum lösbaren Anschluss einer Signalübertragungsleitung ausgebildet ist.

Der Trübheitssensor 10 erstreckt sich längs der virtuellen Längsachse L und weist ein aus Gründen der erleichterten Montage bevorzugt mehrteiliges Sensorgehäuse 16 auf, welches im dargestellten Ausführungsbeispiel eine zylindrische Gestalt hat. Die Längsachse L ist dann Zylinderachse des Sensorgehäuses oder zumindest seiner zylindrischen Abschnitte. Eine Ausnahme von der zylindrischen Gestalt bildet vorliegend ein Fluiderfassungsbereich 14, welcher als nutförmige Ausnehmung 18 eines erfassungsendseitigen Sensorgehäuseteils 16a ausgebildet ist, welcher sich aber immer noch vollständig innerhalb einer an den zylindrischen Außenflächen des Sensorgehäuses 16 anliegenden zylindrischen Einhüllenden des Sensorgehäuses oder wenigstens des Sensorgehäuseteils 16a erstreckt. Die nutförmige Ausnehmung 18 verläuft längs einer virtuellen Nutachse N, welche sich mit Abstand von der das Sensorgehäuse 16 zentral durchsetzend gedachten virtuellen Längsachse L orthogonal zu dieser erstreckt.

Der Fluiderfassungsbereich 14 ist an drei Seiten von Außenflächen 20a, 20b und 20c des Sensorgehäuses 16, insbesondere des Sensorgehäuseteils 16a, umgeben. Die den Fluiderfassungsbereich 14 einfassenden Außenflächen 20a, 20b und 20c des Sensorgehäuses 16 sind bevorzugt eben, wobei bevorzugt jeweils Paare von aneinander angrenzenden Außenflächen 20a und 20b einerseits sowie 20b und 20c andererseits einen rechten Winkel zwischen sich einschließen.

Die Außenfläche 20a ist zum Teil durch die Außenfläche einer ersten Scheibe 22 gebildet, welche im Sensorgehäuse 16, insbesondere im Sensorgehäuseteil 16a, aufgenommen ist. Die erste Scheibe 22 ist aufgrund der hohen Kratzfestigkeit und chemischen Beständigkeit bevorzugt aus mineralischem Material gebildet, wobei unter den mineralischen Materialien Korund stärker bevorzugt und unter den Korunden Saphirglas am stärksten bevorzugt ist. Die gegenüberliegende und zur Außenfläche 20a bevorzugt parallele Außenfläche 20c ist zum Teil durch die Außenfläche einer zweiten Scheibe 24 gebildet. Die zweite Scheibe 24 ist vorzugsweise hinsichtlich ihrer Abmessungen und ihres Materials baugleich mit der ersten Scheibe 22.

Der Fluiderfassungsbereich 14 ist gemeinsam mit den ihn einfassenden Wänden des Sensorgehäuses 16 spiegelsymmetrisch bezüglich einer die Nutachse N enthaltenden und zur Längsachse L sowie zur Zeichenebene von Figur 1 orthogonalen Spiegelsymmetrieebene SE ausgebildet. Die Scheiben 22 und 24 sind durch einen thermisch schmelzbaren und erstarrbaren Kitt 26 mit dem übrigen Sensorgehäuse 16 fest und dicht verbunden. Der erstarrte Kitt 26 läuft längs eines umlaufenden Randes der Scheiben 22 und 24 um jede der Scheiben 22 und 24 geschlossen um. Das übrige Sensorgehäuse 16 ist bevorzugt aus nicht-rostenden Stahl hergestellt.

Nachdem nun die Struktur des Fluiderfassungsbereichs 14 und des ihn umgebenden Bereichs des Sensorgehäuses 16 beschrieben wurde, wird nachfolgend der Aufbau der Sensortechnik im Trübheitssensor 10 erläutert.

Zwischen dem freien Längsende und dem Fluiderfassungsbereich 14 ist im Sensorgehäuse 16 eine erste Strahlungssensorbaugruppe 28 angeordnet. Die erste Strahlungssensorbaugruppe 28 umfasst ein, bevorzugt einstückig spritzgegossenes, erstes Halterungsbauteil 30, an welchem ein an einer ersten Leiterplatte 31 aufgenommener erster Strahlungssensor 32 gehaltert ist. Zwischen dem ersten Strahlungssensor 32 und der ersten Scheibe 22 ist ein erster optischer Filter 34 angeordnet, welcher elektromagnetische Strahlung im Wellenlängenbereich von 840 nm oder größer durchlässt und Strahlung mit kürzeren Wellenlängen blockiert.

Die erste Strahlungssensorbaugruppe 28 wurde durch eine endseitige Öffnung 36 des Sensorgehäuses 16 in das Sensorgehäuse 16 eingeführt. Die Öffnung 36 ist nun durch einen Gehäusedeckel 38 verschlossen, welcher stoffschlüssig, bevorzugt durch eine Laserschweißnaht 40, an dem Sensorgehäuse 16, insbesondere am Sensorgehäuseteil 16a, festgelegt ist. Zwischen der ersten Strahlungssensorbaugruppe 28 und dem Gehäusedeckel 38 ist ein elastomerer O-Ring 42 angeordnet, welcher im vorliegenden Ausführungsbeispiel hauptsächlich dazu dient, eine zur ersten Scheibe 22 hin wirkende Vorspannkraft auf die erste Strahlungssensorbaugruppe 28 auszuüben. Der O-Ring 42 ist unmittelbar in Anlageeingriff einerseits mit dem Gehäusedeckel 38 und andererseits mit dem Halterungsbauteil 30. Durch die Vorspannkraft wird der erste Strahlungssensor 32 gemeinsam mit dem ersten optischen Filter 34 zur Anlage an die Innenfläche der Scheibe 22 vorgespannt.

Unter der die Außenflächen 20a und 20c überbrückend verbindenden Außenfläche 20b verläuft ein Leitungstunnel 44, in welchem eine Signalübertragungsleitung 46 vom ersten Strahlungssensor 32 zu einer elektronischen Baueinheit 48 verläuft, welche im Sensorgehäuse 16, insbesondere in einem zweiten Sensorgehäuseteil 16b, aufgenommen ist. Die elektronische Baueinheit 48 umfasst eine Leiterplatte 50 mit einer Mehrzahl von darauf angeordneten elektronischen Bauteilen.

Eines der elektronischen Bauteile der Baueinheit 48 ist eine LED 52, welche als Strahlungsquelle 54 des Trübheitssensors 10 dient. Die LED 52 strahlt Licht im nahen Infrarot-Wellenlängenbereich ab, bevorzugt bei einer Wellenlänge von 840 bis 860 nm. Die LED 52 ist durch einen Glaskörper 56 umgeben, welcher für eine hohe Temperaturunempfindlichkeit der LED 52 sorgt. Die Scheiben 22 und 24 sind für von der LED 52 emittierte Strahlung durchlässig.

Die LED 52 ist in einem zweiten Halterungsbauteil 58 aufgenommen, welches Bestandteil einer zweiten Strahlungssensorbaugruppe 60 ist. Das zweite Halterungsbauteil 58 ist bevorzugt einstückig spritzgegossen. Es trägt auf seiner von der elektronischen Baueinheit 48 abgewandten Seite einen an einer zweiten Leiterplatte 61 aufgenommenen zweiten Strahlungssensor 62.

Der zweite Strahlungssensor 62 befindet sich direkt zwischen der LED 52 und dem ersten Strahlungssensor 32. Die optische Achse der LED 52 ist in Figur 1 mit OA bezeichnet. Sie ist die kürzeste Strecke zwischen LED 52 und der der ersten Scheibe 22 zugewandten photosensitiven Sensorerfassungsfläche 32a des ersten Strahlungssensors 32. Die zur Längsachse L des Sensorgehäuses 16 parallele optische Achse OA zeigt auch einen Strahlengang von der LED 52 emittierter Strahlung hin zum ersten Strahlungssensor 32.

In diesem Strahlengang ist der zweite Strahlungssensor 62 angeordnet. Damit der zweite Strahlungssensor 62 von von der LED 52 emittierter Strahlung durchstrahlbar ist, weist der zweite Strahlungssensor 62 eine ihn in Dickenrichtung durchsetzende Öffnung 64 auf, und zwar bevorzugt derart, dass die optische Achse OA eine virtuelle Mittelachse der Öffnung 64 bildet. Ebenso weist die zweite Leiterplatte 61 eine, bevorzugt zur Öffnung 64 koaxiale, Öffnung 65 auf. Durch die Öffnungen 64 und 65 hindurch kann von der LED 52 emittierte Strahlung zunächst den Fluiderfassungsbereich 14 erreichen. Von dort kann jener Strahlungsanteil, welcher nicht auf im Fluiderfassungsbereich 14 vorhandene Schwebstoffe trifft und durch diese absorbiert oder gestreut wird, den Fluiderfassungsbereich 14 transmittieren und den ersten Strahlungssensor 32 erreichen. Jener Strahlungsanteil, welcher dagegen von Schwebstoffen im Fluiderfassungsbereich 14 mit einer der Einfallsrichtung E entgegengesetzten Strahlungskomponente gestreut bzw. reflektiert wird, kann den zweiten Strahlungssensor 62 erreichen.

Auch vor der photosensitiven Sensorerfassungsfläche 62a des zweiten Strahlungssensors 62 befindet sich ein optischer Filter 66, welcher mit dem optischen Filter 34 zwischen dem ersten Strahlungssensor 32 und der ersten Scheibe 22 identisch ist. Der optische Filter 66 kann ebenfalls eine ihn in Dickenrichtung durchsetzende Öffnung aufweisen, welche die Öffnung 64 des zweiten Strahlungssensors 62 längs der optischen Achse OA fortsetzt. Im vorliegenden Ausführungsbeispiel weist der optische Filter 66 keine solche Öffnung auf, sodass von der LED 52 emittierte Strahlung den Fluiderfassungsbereich 14 nur nach Durchgang des optischen Filter 66 und damit nur in dem vom optischen Filter 66 durchgelassenen Wellenlängenbereich erreicht.

Aufgrund der gleichzeitigen Erfassung von geradlinig transmittierter Strahlung mittels des ersten Strahlungssensors 32 sowie von entgegen der Einfallsrichtung E gestreuter bzw. reflektierter Strahlung mittels des zweiten Strahlungssensors 62 kann mit der vorliegend vorgeschlagenen Anordnung, bei welcher der zweite Strahlungssensor 62 im Strahlengang von von der LED 52 zum ersten Strahlungssensor 32 hin emittierter Strahlung angeordnet ist, ein sehr schlanker Trübheitssensor 10 mit hoher Messgenauigkeit über einen großen Mengenbereich von in einem messtechnisch zu erfassenden Fluid enthaltenen Schwebstoffen erhalten werden.

Eine Zuordnung der von den einzelnen Strahlungssensoren 32 und 62 gelieferten Signale zur Trübheit des messtechnisch zu erfassenden Fluids im Fluiderfassungsbereich 14 und folglich, bei bekannter Art und Struktur der im Fluid enthaltenen Schwebstoffe, zur Menge der in einem Bezugsvolumen des Fluids enthaltenen Schwebstoffe, kann durch Kalibration des Trübheitssensors mittels unterschiedlicher Kalibrationsfluide erhalten werden. Die Kalibrationsfluide unterscheiden sich dabei bevorzugt nur hinsichtlich der Menge an in einem Bezugsvolumen des jeweiligen Kalibrationsfluids enthaltenen Schwebstoffen, sodass ein Unterschied der Sensorsignale während der Kalibration unmittelbar auf einen Unterschied der auf das Fluidvolumen bezogenen Menge an Schwebstoffen zurückgeführt werden kann.

Experimente haben gezeigt, dass mit dem vorliegend vorgestellten Trübheitssensor 10, mit bevorzugt parallelen und aufeinander zuweisenden ebenen photosensitiven Sensorerfassungsflächen 32a und 62a der Strahlungssensoren 32 bzw. 62, von welchen jene des zweiten Strahlungssensors 62 im Strahlengang der LED 52 zu jener des ersten Strahlungssensors 32 gelegen ist, die von den Strahlungssensoren 32 und 62 gelieferten Erfassungssignale bzw. ein daraus ermitteltes kumulatives Erfassungssignal ein äußerst vorteilhaftes lineares Änderungsverhalten in Abhängigkeit von einer Änderung der Menge an Schwebstoffen in einem Bezugsvolumen des messtechnisch zu erfassenden Fluids zeigen bzw. zeigt. Dieses lineare Verhalten liegt vorteilhaft über im Wesentlichen den gesamten Messbereich, bezogen auf die Trübheit bzw. die damit im Zusammenhang stehende erfassbare Menge an Schwebstoffen, vor.

Lediglich der Vollständigkeit halber sei erwähnt, dass auch der zweite Strahlungssensor 62 durch eine Signalübertragungsleitung 68 mit der elektronischen Baueinheit 48 signalübertragend verbunden ist.

Die zweite Sensorbaugruppe 60 ist durch einen zweiten elastomeren O-Ring 70 gegenüber dem Sensorgehäuse 16, insbesondere gegenüber einer Innenwand des ersten Sensorgehäuseteils 16a abgedichtet. Der in der Darstellung der Figur 1 erkennbare Spalt zwischen der Innenwand des ersten Sensorgehäuseteils 16a und dem zweiten O-Ring 70 ist lediglich durch die Darstellung des zweiten O-Rings 70 im unverformten Zustand begründet. Bei korrekter Darstellung des tatsächlich vorliegenden verformten Zustands liegt der zweite O-Ring 70 an der bezeichneten Innenwand an. Gleichzeitig befindet sich der zweite O-Ring 70 in Anlageeingriff mit einer Stirnfläche des zweiten Gehäuseteils 16b, sodass der zweite O-Ring 70 durch Anlageeingriff mit der zweiten Sensorbaugruppe 60 die zweite Sensorbaugruppe 60 zur zweiten Scheibe 24 hin vorspannt.

Der zweite O-Ring 70 liegt dabei zum einen unmittelbar an der Rückseite der LED 52 an und übt eine Vorspannkraft unmittelbar auf die LED 52 in Richtung der zweiten Scheibe 24 aus. Dadurch wird die LED 52 in die sie aufnehmende Ausnehmung im zweiten Halterungsbauteil 58 hinein vorgespannt.

Zum anderen liegt der zweite O-Ring 70 unmittelbar am zweiten Halterungsbauteil 58 an und spannt dieses gemeinsam mit dem daran gehalterten zweiten Strahlungssensor 62 in Richtung zur zweiten Scheibe 24 hin und in Anlage an diese.

Das zweite Sensorgehäuseteil 16b kann, bevorzugt durch eine Laserschweißnaht 72, stoffschlüssig mit dem ersten Sensorgehäuseteil 16a verbunden sein.

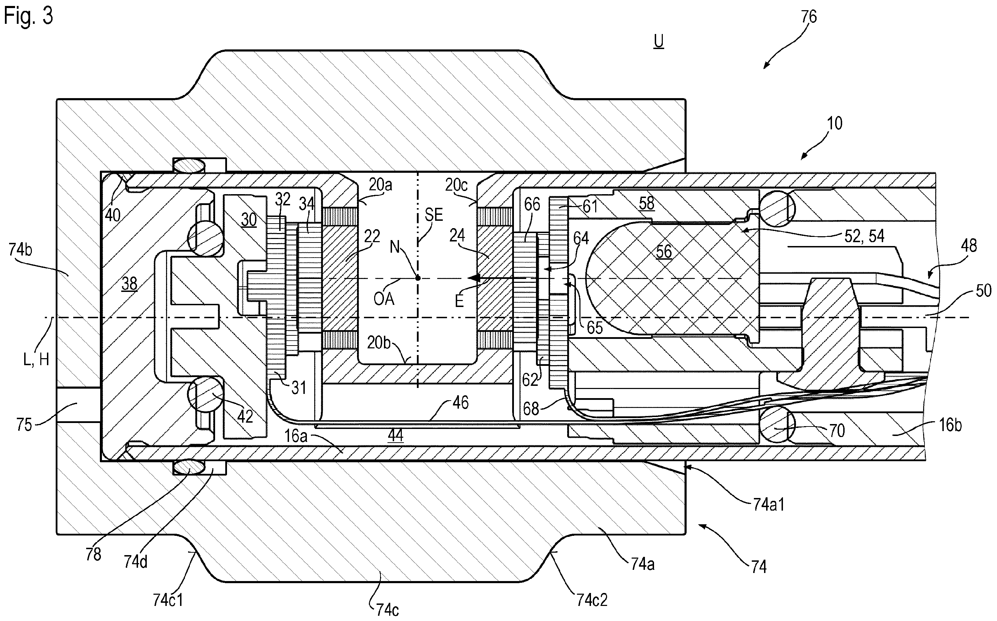

In Figur 3 ist das Erfassungsende 12 des Trübheitssensors 10 erneut dargestellt, wobei zur besseren Übersichtlichkeit nur ein Teil der aus Figur 1 bereits bekannten Bauteile und Bauteilabschnitte in Figur 3 erneut mit Bezugszeichen versehen sind. Aufgrund der Übereinstimmung der Darstellungen des Erfassungsendes 12 in den Figuren 1 und 3 reichen die in Figur 3 vergebenen Bezugszeichen bei ergänzender Betrachtung auch von Figur 1 zur Erkennung des Trübheitssensors 10 aus. In Figur 3 nicht mit Bezugszeichen bezeichnete Bauteile und Bauteilabschnitte sind in Figur 1 identisch dargestellt und mit Bezugszeichen versehen.

In Figur 3 ist ein erster Kalibrationskörper 74 zur Kalibration bzw. Korrektur des ersten Strahlungssensors 32 kalibrationsbereit am Erfassungsende 12 des Trübheitssensors 10 angeordnet. Der erste Kalibrationskörper 74 überspannt den Fluiderfassungsbereich 14, sodass kein Umgebungslicht von der Außenumgebung U außerhalb des Trübheitssensors 10 und außerhalb des Fluiderfassungsbereichs 14 den Fluiderfassungsbereich 14 und damit den ersten Strahlungssensor 32 erreicht.

Der erste Kalibrationskörper 74, welcher mit dem Trübheitssensor 10 eine erste Trübheitssensorbaugruppe 76 bildet, ist topfartig ausgebildet und erstreckt sich längs einer Hülsenachse H. Die Hülsenachse H, die eine Rotationssymmetrieachse des bevorzugt rotationssymmetrisch ausgebildeten ersten Kalibrationskörpers 74 sein kann, ist in dem in Fig. 3 dargestellten ersten kalibrationsbereiten Zustand mit der Längsachse L des Trübheitssensors 10 kollinear.

Der erste Kalibrationskörper 74 umfasst eine das Sensorgehäuse 16, im dargestellten Beispiel genauer das erste Sensorgehäuseteil 16a in Umfangsrichtung um die Längsachse L umgebende Mantelwandung 74a und umfasst eine orthogonal zur Längsachse L verlaufende und die Mantelwandung 74a an einem Längsende verschließende Bodenwandung 74b. Die Bodenwandung 74b, welche sich an dem der Einführöffnung 74a1 des ersten Kalibrationskörpers 74 entgegengesetzten Längsende des ersten Kalibrationskörpers 74 befindet, ist funktional nicht unbedingt notwendig, dient jedoch als vorteilhafter Endanschlag, sodass der Benutzer, welcher den ersten Kalibrationskörper 74 bevorzugt längs der Längsachse L vom Erfassungsende 12 her auf den Trübheitssensor 10 aufschiebt, die richtige Relativposition des ersten Kalibrationskörpers 74 relativ zum Trübheitssensor 10 auch haptisch erkennen kann. Es reicht zur Herstellung des in Figur 3 gezeigten ersten kalibrationsbereiten Zustands der ersten Trübheitssensorbaugruppe 76 aus, den ersten Kalibrationskörper 74 axial soweit über das Erfassungsende 12 längs der Längsachse L aufzuschieben, bis die Bodenwandung 74b körperlich an der freien Stirnseite des Erfassungsendes 12 des Trübheitssensors 10 anliegt.

Zur Erleichterung des Auf- und Abstreifens des ersten Kalibrationskörpers 74 auf das bzw. von dem Sensorgehäuse 16, insbesondere auf den bzw. von dem ersten Sensorgehäuseteil 16a weist der erste Kalibrationskörper 74 im dargestellten Ausführungsbeispiel an seiner Mantelwandung 74a eine Verdickung 74c auf, deren auch längs der Längsachse L weisende Flanken 74c1 und 74c2 einen manuellen Kraftangriff durch einen Benutzer erleichtern. Bevorzugt läuft die Verdickung 74c in Umfangsrichtung geschlossen um.

Zur weiteren Erleichterung des Auf- und Abstreifens des ersten Kalibrationskörpers 74 auf das bzw. von dem Sensorgehäuse 16 ist in der Bodenwandung 74b ein die Bodenwandung 74b durchsetzender Kanal 75 ausgebildet, durch welchen hindurch Luft zum Druckausgleich von einer Seite der Bodenwandung 74b zur jeweils anderen Seite strömen kann.

Ein auf der Innenseite der Mantelwandung 74a in einer Nut 74d aufgenommener Elastomerring 78, etwa in Gestalt eines O-Dichtungsrings, ist im dargestellten ersten kalibrationsbereiten Zustand zwischen der Innenseite der Mantelwandung 74a und der Außenseite des Sensorgehäuses 16, insbesondere des ersten Sensorgehäuseteils 16a, verformt und hält so reibschlüssig den ersten Kalibrationskörper 74 in dem in Figur 3 gezeigten ersten kalibrationsbereiten Zustand am Trübheitssensor 10. Die orthogonal zur Längsachse L zu messende lichte Weite des Kalibrationskörpers 74 ist geringfügig größer als der Durchmesser des in den ersten Kalibrationskörper 74 eingeführten Abschnitts des Sensorgehäuses 16. Die Ausnehmung des Kalibrationskörpers 74 kann bezüglich dem Außendurchmesser des in den ersten Kalibrationskörper 74 einzuführenden Abschnitts des Sensorgehäuses 16 mit einer Spielpassung ausgebildet sein.

Von der längs der Längsachse L zu messenden lichten Tiefe des ersten Kalibrationskörpers 74, längs welcher das Erfassungsende 12 des Trübheitssensors 10 in den Kalibrationskörper 74 einragt, ist der Elastomerring 78 bevorzugt im letzten Viertel, besonders bevorzugt im letzten Fünftel, angeordnet um sicherzustellen, dass der erste Kalibrationskörper 74 erst dann reibschlüssig durch den Elastomerring 78 am Erfassungsende 12 des Trübheitssensors 10 gehalten wird, wenn der erste Kalibrationskörper 74 sicher den Fluiderfassungsbereich 14 gegenüber der Außenumgebung gegen Lichteinfall abschirmt.

Im ersten kalibrationsbereiten Zustand der ersten Trübheitssensorbaugruppe 76 erreicht nur von der Strahlungsquelle 54, also von der LED 52, emittierte Strahlung den ersten Strahlungssensor 32. Somit kann ein Erfassungszustand des Strahlungssensors 32 einem Bestromungszustand der LED 52 qualitativ oder/und quantitativ zugeordnet werden. Dadurch kann eine etwaig eintretende alterungsbedingte Änderung der Emissionscharakteristik der LED 52 oder/und eine etwaig eintretende alterungsbedingte Änderung der Erfassungscharakteristik des ersten Strahlungssensors 32 gegenüber einem jeweiligen Neuzustand durch Zuordnung von Erfassungszuständen des ersten Strahlungssensors 32 berücksichtigt und korrigiert werden, sodass die altersbedingte Änderung der Emissionscharakteristik oder/und der Erfassungscharakteristik nicht zu fehlerhaften Erfassungen durch den ersten Strahlungssensor 32 führt.

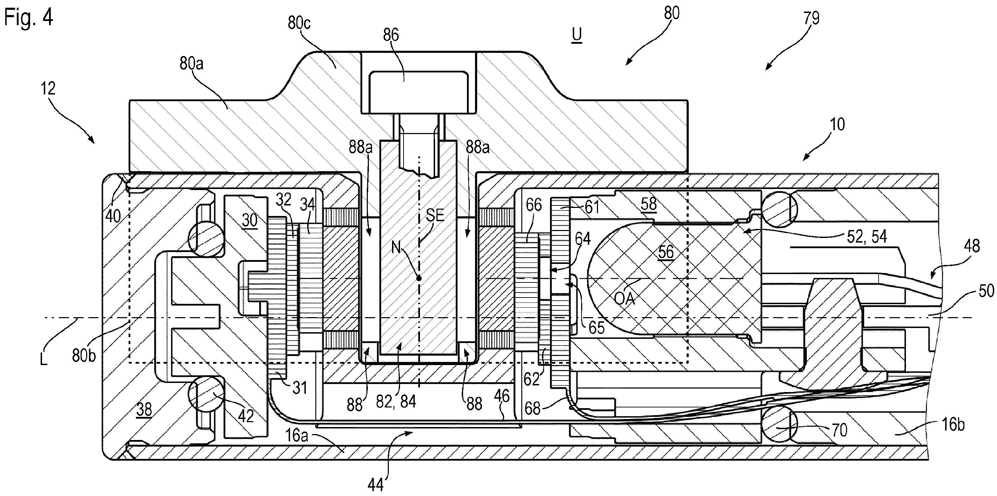

In Figur 4 ist eine zweite Trübheitssensorbaugruppe 79 dargestellt, welche den Trübheitssensor 10 von Figur 1 und einen zweiten Kalibrationskörper 80 umfasst. Wie im Fall von Figur 3 ist auch in Figur 4 der besseren Übersichtlichkeit wegen nur ein Teil der Bauteile und Bauteilabschnitte des Trübheitssensors 10 mit Bezugszeichen versehen. Durch Vergleich mit Figur 1 lassen sich die nicht mit Bezugszeichen versehenen Bauteile und Bauteilabschnitte des Trübheitssensors 10 in Figur 4 ohne weiteres identifizieren.

Der zweite Kalibrationskörper 80 ist als Klammer ausgebildet, welche in dem in Figur 4 dargestellten zweiten kalibrationsbereiten Zustand der zweiten Trübheitssensorbaugruppe 78 den den Fluiderfassungsbereich 14 aufweisenden Abschnitt des Trübheitssensors 10 in Umfangsrichtung um die Längsachse L unvollständig umgreift. Der zweite Kalibrationskörper 80 umgreift den Trübheitssensor 10, insbesondere den den Fluiderfassungsbereich 14 aufweisenden Abschnitt des ersten Sensorgehäuseteils 16a allerdings um mehr als den halben Umfang des ersten Sensorgehäuseteils 16a, sodass der zweite Kalibrationskörper 80 aufgrund seiner Bauteilelastizität am Trübheitssensor 10 verrastet werden kann.

Im Gegensatz zum ersten Kalibrationskörper 74, welcher längs der Längsachse L auf das Erfassungsende 12 des Trübheitssensors 10 aufgeschoben wird, wird der zweite Kalibrationskörper 80 im dargestellten Beispiel orthogonal zur Längsachse L auf den Trübheitssensor 10 aufgeclipst.

In weiterem Gegensatz zum ersten Kalibrationskörper 74 weist der zweite Kalibrationskörper 80 auf seiner zum Trübheitssensor 10 hinweisenden Innenseite eine von der Innenseite abstehende Blockadeformation 82 auf. Die Blockadeformation 82 ist im dargestellten Ausführungsbeispiel gebildet durch einen für Strahlung der LED 52 strahlungsdichten Block 84, welche in dem zweiten kalibrationsbereiten Zustand in den Fluiderfassungsbereich 14 einragt und den Fluiderfassungsbereich 14 soweit ausfüllt, dass die Scheibe 22 und ihre Gehäuseumgebung von Strahlung der LED 52 nicht erreicht wird und somit keine von der Scheibe 22 und ihrer Gehäuseumgebung reflektierte Strahlung in den zweiten Strahlungssensor 62 einfallen kann.

Der Block 84 ist über eine nur im Teilschnitt gezeigte Schraube 86 lösbar mit einem zur verrastenden Befestigung am Trübheitssensor 10 ausgebildeten Klammerbauteil 80a verbunden. Der Block 84 kann erforderlichenfalls gegen einen anderen Block anderer Farbe oder/und anderer Oberflächenbeschaffenheit getauscht werden.

Ansonsten schirmt das Klammerbauteil 80a bzw. der zweite Kalibrationskörper 80 wiederum den Fluiderfassungsbereich 14 gegen elektromagnetische Strahlung aus der Außenumgebung U ab. Den zweiten Strahlungssensor 62 erreicht damit nur Strahlung, welche von der LED 52, also von der Strahlungsquelle 54, emittiert wurde.

Damit kann die Erfassungscharakteristik des zweiten Strahlungssensors 62 erforderlichenfalls an eine altersbedingte Änderung der Emissionscharakteristik der LED 52 oder/und an eine altersbedingte Änderung der Erfassungscharakteristik des zweiten Strahlungssensors 62 angepasst und so eine fehlerhafte Erfassung des zweiten Strahlungssensors 62 aufgrund einer Änderung der Emissionscharakteristik der LED 52 oder/und aufgrund einer Änderung der Erfassungscharakteristik des zweiten Strahlungssensors 62 vermieden bzw. korrigiert werden.

Der zweite Kalibrationskörper 80 wirkt mit seiner Blockadeformation 82 nach dem Schlüssel-Schloss-Prinzip mit dem Sensorgehäuse 16 und dem daran ausgebildeten Fluiderfassungsbereich 14 zusammen. Zu Erleichterung der Handhabung des zweiten Kalibrationskörpers 80 weist auch dieser, insbesondere das Klammerbauteil 80a, eine Verdickung 80c auf. Strichliniert ist mit Bezugszeichen 80b der Rand der vor und hinter der Zeichenebene liegenden Klammerbacken des Klammerbauteils 80a angezeigt, welche das Sensorgehäuse 16 unvollständig in Umfangsrichtung umgreifen.

Der Block 84 befindet sich im dargestellten Ausführungsbeispiel zwischen zwei vorzugsweise einstückig mit dem Klammerbauteil 80a ausgebildeten Wangen 88, welche jeweils eine Öffnung 88a aufweisen, durch welche hindurch der Block 84 für Strahlung von der LED 52 erreichbar ist. Der Block 84 weist definierte Reflexionseigenschaften auf, welche bei vorbestimmter Bestromung einer fabrikneuen LED 52 einen vorbestimmten auf den zweiten Strahlungssensor 62 einfallenden Strahlungsanteil erwarten lassen. Weicht der tatsächlich auf den zweiten Strahlungssensor 62 einfallende Strahlungsanteil von dem vorbestimmten erwarteten Strahlungsanteil ab, kann anhand der Abweichung das Erfassungsverhalten des zweiten Strahlungssensors 62 korrigiert werden.

Bei der Korrektur alterungsbedingter Änderungen an der LED 52 sowie an dem ersten oder dem zweiten Strahlungssensor 32 bzw. 62 können die LED 52 und der jeweilige Strahlungssensor 32 bzw. 62 als eine funktionale Einheit aus Strahlungsquelle und Sensor angesehen und als Einheit korrigiert werden. Dann spielt es vorteilhaft keine Rolle welche Komponente in welchem Maße funktionalen Änderungen unterliegt.

## Patentansprüche

1. Trübheitssensor (10) zur Erfassung einer Eintrübung eines Fluids durch im Fluid enthaltene Schwebstoffe, wobei der Trübheitssensor (10) umfasst:
- einen Fluiderfassungsbereich (14) zur Aufnahme und zur messtechnischen Erfassung von Fluid
- eine Strahlungsquelle (54) zur Emission von Strahlung in den Fluiderfassungsbereich (14),
- einen ersten Strahlungssensor (32) zur Erfassung eines ersten Teils der von der Strahlungsquelle (54) emittierten Strahlung, und
- einen vom ersten Strahlungssensor (32) verschiedenen zweiten Strahlungssensor (62) zur Erfassung eines vom ersten Teil verschiedenen zweiten Teils der von der Strahlungsquelle (54) emittierten Strahlung,
wobei sich wenigstens ein Abschnitt des Fluiderfassungsbereichs (14) zwischen dem ersten (32) und dem zweiten Strahlungssensor (62) befindet,
**dadurch gekennzeichnet, dass** sich der zweite Strahlungssensor (62) im Strahlengang (OA) des vom ersten Strahlungssensor (32) erfassten ersten Teils der von der Strahlungsquelle (54) emittierten Strahlung befindet.

2. Trübheitssensor (10) nach Anspruch 1,
**dadurch gekennzeichnet, dass** der zweite Strahlungssensor (62) eine ihn durchsetzende Öffnung (64) aufweist, durch welche hindurch von der Strahlungsquelle (54) emittierte Strahlung von der Strahlungsquelle (54) zum ersten Strahlungssensor (32) gelangt.

3. Trübheitssensor (10) nach Anspruch 1 oder 2,
**dadurch gekennzeichnet, dass** der erste Strahlungssensor (32) eine ebene erste strahlungsempfindliche Sensorerfassungsfläche (32a) aufweist, welche zum zweiten Strahlungssensor (62) weist und dass der zweite Strahlungssensor (62) eine ebene zweite strahlungsempfindliche Sensorerfassungsfläche (62a) aufweist, welche zum ersten Strahlungssensor (32) weist.

4. Trübheitssensor (10) nach Anspruch 3,
**dadurch gekennzeichnet, dass** die erste (32a) und die zweite Sensorerfassungsfläche (62a) zueinander parallel angeordnet sind.

5. Trübheitssensor (10) nach einem der vorhergehenden Ansprüche,
**dadurch gekennzeichnet, dass** die Strahlungsquelle (54), der erste Strahlungssensor (32) und der zweite Strahlungssensor (62) in einem Sensorgehäuse (16) aufgenommen sind und durch das Sensorgehäuse (16) gegenüber der Außenumgebung (U) des Sensorgehäuses (16) abgeschirmt sind, wobei der Fluiderfassungsbereich (14) zur Außenumgebung des Sensorgehäuses (16) offen ist.

6. Trübheitssensor (10) nach Anspruch 5,
**dadurch gekennzeichnet, dass** wenigstens ein zum zweiten Strahlungssensor (62) weisender Abschnitt (20a) des Sensorgehäuses (16) zur Veränderung seiner Reflexionseigenschaft im Wellenlängenbereich der von der Strahlungsquelle (54) emittierten Strahlung oberflächenbearbeitet ist.

7. Trübheitssensor (10) nach Anspruch 5 oder 6,
**dadurch gekennzeichnet, dass** das Sensorgehäuse (16) eine erste (22) und eine zweite Scheibe (24), vorzugsweise aus mineralischem Material, aufweist, welche jeweils Strahlung der Strahlungsquelle (54) durchlassen, wobei die erste (22) und die zweite Scheibe (24) mit Abstand voneinander einander gegenüberliegend im Strahlengang (OA) der Strahlungsquelle (54) gelegen sind und wobei die erste Scheibe (22) den ersten Strahlungssensor (32) und die zweite Scheibe (24) den zweiten Strahlungssensor (62) gegenüber dem zwischen der ersten (22) und der zweiten Scheibe (24) gelegenen Fluiderfassungsbereich (14) abschirmt.

8. Trübheitssensor (10) nach Anspruch 7,
**dadurch gekennzeichnet, dass** der erste Strahlungssensor (32) in Richtung zur ersten Scheibe (22) hin durch eine erste Vorspannkraft vorgespannt ist oder/und dass der zweite Strahlungssensor (62) in Richtung zur zweiten Scheibe (24) hin durch eine zweite Vorspannkraft vorgespannt ist.

9. Trübheitssensor (10) nach Anspruch 8,
**dadurch gekennzeichnet, dass** der erste Strahlungssensor (32) in einer ersten Strahlungssensorbaugruppe (28) aufgenommen ist, wobei die erste Strahlungssensorbaugruppe (28) gegen ein erstes Gehäusebauteil (38) des Sensorgehäuses (16) durch ein erstes Dichtungsbauteil (42) abgedichtet ist, wobei das erste Dichtungsbauteil (42) die erste Vorspannkraft bewirkt.

10. Trübheitssensor (10) nach einem der Ansprüche 8 oder 9,
**dadurch gekennzeichnet, dass** der zweite Strahlungssensor in einer zweiten Strahlungssensorbaugruppe (60) aufgenommen ist, wobei die zweite Strahlungssensorbaugruppe (60) gegen ein zweites Gehäusebauteil (16b) des Sensorgehäuses (16) durch ein zweites Dichtungsbauteil (70) abgedichtet ist, wobei das zweite Dichtungsbauteil (70) die zweite Vorspannkraft bewirkt.

11. Trübheitssensor (10) nach Anspruch 10,
**dadurch gekennzeichnet, dass** in der zweiten Strahlungssensorbaugruppe (60) auch die Strahlungsquelle (54) aufgenommen ist.

12. Trübheitssensor (10) nach Anspruch 11,
**dadurch gekennzeichnet, dass** die Strahlungsquelle (54) mit dem zweiten Dichtungsbauteil (70) in Anlageeingriff ist, so dass das Dichtungsbauteil (70) unmittelbar die Strahlungsquelle (54) zur zweiten Scheibe (24) hin vorspannt.

13. Trübheitssensor (10) nach einem der vorhergehenden Ansprüche, unter Einbeziehung des Anspruchs 7,
**dadurch gekennzeichnet, dass** das Sensorgehäuse (16) sich mit seiner größten Abmessung längs einer Längsachse (L) erstreckt, wobei die erste (22) und die zweite Scheibe (24) jeweils quer zur Längsachse (L) orientiert am Sensorgehäuse (16) aufgenommen sind.

14. Trübheitssensorbaugruppe (76, 79), umfassend einen Trübheitssensor (10) nach Anspruch 13, und einen ersten Kalibrationskörper (74) zur Kalibration des Trübheitssensors (10),
**dadurch gekennzeichnet, dass** der erste Kalibrationskörper (74) derart lösbar mit dem Sensorgehäuse (16) verbindbar ist, dass in einem ersten kalibrationsbereiten Betriebszustand der Trübheitssensorbaugruppe (76, 79) der erste Kalibrationskörper (74) zu einer Abschirmung des Fluiderfassungsbereichs (14) vor einer Einstrahlung von Licht aus der Außenumgebung (U) der Trübheitssensorbaugruppe (76, 79) wenigstens beiträgt, wobei der erste Strahlungssensor (32) im ersten kalibrationsbereiten Betriebszustand für von der Strahlungsquelle (54) emittierte Strahlung erreichbar ist.

15. Trübheitssensorbaugruppe (76, 79), insbesondere nach Anspruch 14, umfassend einen Trübheitssensor (10) nach Anspruch 13, und einen zweiten Kalibrationskörper (80) zur Kalibration des Trübheitssensors (70),
**dadurch gekennzeichnet, dass** der zweite Kalibrationskörper (80) derart lösbar mit dem Sensorgehäuse (16) verbindbar ist, dass in einem zweiten kalibrationsbereiten Betriebszustand der Trübheitssensorbaugruppe (76, 79) der zweite Kalibrationskörper (80) zu einer Abschirmung des Fluiderfassungsbereichs (14) vor einer Einstrahlung von Licht aus der Außenumgebung (U) der Trübheitssensorbaugruppe (76, 79) wenigstens beiträgt, wobei der zweite Kalibrationskörper (80) eine Blockadeformation (82) aufweist, welche im zweiten kalibrationsbereiten Betriebszustand zwischen dem ersten (32) und dem zweiten Strahlungssensor (62) angeordnet ist und den ersten Strahlungssensor (32) gegenüber von der Strahlungsquelle (52) emittierter Strahlung abschirmt.

## Claims

1. A turbidity sensor (10) for detecting a clouding of a fluid due to suspended matter contained in the fluid, the turbidity sensor (10) comprising:
- a fluid detection area (14) for accommodating and for metrologically detecting fluid
- a radiation source (54) for emitting radiation into the fluid detecting region (14),
- a first radiation sensor (32) for detecting a first part of the radiation emitted by the radiation source (54), and
- a second radiation sensor (62), which is different from the first radiation sensor (32), for detecting a second part, which is different from the first part, of the radiation emitted by the radiation source (54),
at least a section of the fluid detection region (14) being located between the first (32) and the second radiation sensor (62),
**characterized in that** the second radiation sensor (62) is located in the beam path (OA) of the first part of the radiation emitted by the radiation source (54), which first part is detected by the first radiation sensor (32).

2. The Turbidity sensor (10) according to claim 1,
**characterized in that** the second radiation sensor (62) has an aperture (64) penetrating it, through which radiation emitted by the radiation source (54) passes from the radiation source (54) to the first radiation sensor (32).

3. The Turbidity sensor (10) according to claim 1 or 2,
**characterized in that** the first radiation sensor (32) has a planar first radiation-sensitive sensor detection surface (32a) which faces the second radiation sensor (62), and **in that** the second radiation sensor (62) has a planar second radiation-sensitive sensor detection surface (62a) which which faces the first radiation sensor (32).

4. The Turbidity sensor (10) according to claim 3,
**characterized in that** the first (32a) and the second sensor detection surface (62a) are arranged parallel to one another.

5. The Turbidity sensor (10) according to one of the preceding claims,
**characterized in that** the radiation source (54), the first radiation sensor (32) and the second radiation sensor (62) are accommodated in a sensor housing (16) and are screened by the sensor housing (16) against the external environment (U) of the sensor housing (16), wherein the fluid detection region (14) is open to the external environment of the sensor housing (16).

6. The Turbidity sensor (10) according to claim 5,
**characterized in that** at least one section (20a) of the sensor housing (16) facing the second radiation sensor (62) is surface-treated to change its reflective properties in the wavelength range of the radiation emitted by the radiation source (54).

7. The Turbidity sensor (10) according to claim 5 or 6,
**characterized in that** the sensor housing (16) has a first (22) and a second panel (24), preferably made of mineral material, which each transmit radiation from the radiation source (54), wherein the first (22) and the second panel (24) are situated opposite one another at a distance from one another in the beam path (OA) of the radiation source (54) and wherein the first panel (22) screens the first radiation sensor (32) and the second panel (24) screens the second radiation sensor (62) from the fluid detection region (14) situated between the first (22) and the second panel (24)

8. The Turbidity sensor (10) according to claim 7,
**characterized in that** the first radiation sensor (32) is biased in the direction of the first panel (22) by a first biasing force and/or **in that** the second radiation sensor (62) is biased in the direction of the second panel (24) by a second biasing force.

9. The Turbidity sensor (10) according to claim 8,
**characterized in that** the first radiation sensor (32) is accommodated in a first radiation sensor assembly (28), the first radiation sensor assembly (28) being sealed against a first housing component (38) of the sensor housing (16) by a first seal component (42), wherein the first seal component (42) effects the first biasing force.

10. The Turbidity sensor (10) according to one of claims 8 or 9,
**characterized in that** the second radiation sensor is accommodated in a second radiation sensor assembly (60), the second radiation sensor assembly (60) being sealed against a second housing component (16b) of the sensor housing (16) by a second seal component (70), the second seal component (70) effecting the second biasing force.

11. The Turbidity sensor (10) according to claim 10,
**characterized in that** the second radiation sensor assembly (60) also houses the radiation source (54).

12. The turbidity sensor (10) of claim 11,
**characterized in that** the radiation source (54) is in abutting engagement with the second seal component (70), so that the seal component (70) directly biases the radiation source (54) toward the second panel (24).

13. Turbidity sensor (10) according to one of the preceding claims, incorporating claim 7,
**characterized in that** the sensor housing (16) extends with its largest dimension along a longitudinal axis (L), wherein the first (22) and the second (24) panels are each received on the sensor housing (16) oriented transverse to the longitudinal axis (L).

14. A turbidity sensor assembly (76, 79) comprising a turbidity sensor (10) according to claim 13, and a first calibration body (74) for calibrating the turbidity sensor (10),
**characterized in that** the first calibration body (74) is detachably connectable to the sensor housing (16) in such a way that in a first operating state of the turbidity sensor assembly (76, 79) in which it is ready for calibration, the first calibration body (74) at least contributes to screening the fluid detection region (14) from irradiation of light from the external environment (U) of the turbidity sensor assembly (76, 79), wherein the first radiation sensor (32) is accessible in the first calibration-ready operating state for radiation emitted by the radiation source (54).

15. The turbidity sensor assembly (76, 79), in particular according to claim 14, comprising a turbidity sensor (10) according to claim 13, and a second calibration body (80) for calibrating the turbidity sensor (70),
**characterized in that** the second calibration body (80) can be detachably connected to the sensor housing (16) in such a way that in a second operating state in which the turbidity sensor assembly (76, 79) is ready for calibration, the second calibration body (80) at least contributes to screening the fluid detection region (14) from irradiation of light from the external environment (U) of the turbidity sensor assembly (76, 79), wherein the second calibration body (80) has a blocking deformation (82) which, in the second calibration-ready operating state, is arranged between the first (32) and the second radiation sensor (62) and shields the first radiation sensor (32) from radiation emitted by the radiation source (52).

## Revendications

1. Capteur de turbidité (10) pour détecter une turbidité d'un fluide due à des matières en suspension contenues dans le fluide, le capteur de turbidité (10) comprenant :
- une zone de détection de fluide (14) pour la réception et la détection métrologique de fluide
- une source de rayonnement (54) pour émettre un rayonnement dans la zone de détection de fluide (14),
- un premier capteur de rayonnement (32) pour détecter une première partie du rayonnement émis par la source de rayonnement (54), et
- un deuxième capteur de rayonnement (62) différent du premier capteur de rayonnement (32) pour détecter une deuxième partie, différente de la première partie, du rayonnement émis par la source de rayonnement (54),
dans lequel au moins une partie de la zone de détection de fluide (14) est située entre le premier (32) et le deuxième capteur de rayonnement (62),
**caractérisé en ce que** le deuxième capteur de rayonnement (62) est situé sur le trajet des rayons (OA) de la première partie du rayonnement émis par la source de rayonnement (54) détectée par le premier capteur de rayonnement (32).

2. Capteur de turbidité (10) selon la revendication 1,
**caractérisé en ce que** le deuxième capteur de rayonnement (62) comporte une ouverture (64) le traversant, à travers laquelle le rayonnement émis par la source de rayonnement (54) passe de la source de rayonnement (54) au premier capteur de rayonnement (32).

3. Capteur de turbidité (10) selon la revendication 1 ou 2,
**caractérisé en ce que** le premier capteur de rayonnement (32) comprend une première surface de détection de capteur plane sensible au rayonnement (32a) faisant face au deuxième capteur de rayonnement (62) et **en ce que** le deuxième capteur de rayonnement (62) comprend une deuxième surface de détection de capteur plane sensible au rayonnement (62a) faisant face au premier capteur de rayonnement (32).

4. Capteur de turbidité (10) selon la revendication 3,
**caractérisé en ce que** la première (32a) et la deuxième (62a) surfaces de détection de capteur sont disposées parallèlement l'une à l'autre.

5. Capteur de turbidité (10) selon l'une des revendications précédentes,
**caractérisé en ce que** la source de rayonnement (54), le premier capteur de rayonnement (32) et le deuxième capteur de rayonnement (62) sont logés dans un boîtier de capteur (16) et sont blindés par le boîtier de capteur (16) par rapport à l'environnement extérieur (U) du boîtier de capteur (16), la zone de détection de fluide (14) étant ouverte sur l'environnement extérieur du boîtier de capteur (16).

6. Capteur de turbidité (10) selon la revendication 5,
**caractérisé en ce qu'**au moins une partie (20a) du boîtier de capteur (16) orientée vers le deuxième capteur de rayonnement (62) est traitée en surface pour modifier sa propriété de réflexion dans la plage de longueurs d'onde du rayonnement émis par la source de rayonnement (54).

7. Capteur de turbidité (10) selon la revendication 5 ou 6,
**caractérisé en ce que** le boîtier du capteur (16) comprend un premier (22) et un deuxième panneau (24), de préférence en matériau minéral, qui transmettent chacun le rayonnement de la source de rayonnement (54), dans lequel le premier (22) et le deuxième (24) panneaux sont situés à distance l'un de l'autre et en face l'un de l'autre dans le trajet des rayons (OA) de la source de rayonnement (54) et dans lequel le premier panneau (22) protège le premier capteur de rayonnement (32) et le deuxième panneau (24) blinde le deuxième capteur de rayonnement (62) par rapport à la zone de détection de fluide (14) située entre le premier (22) et le deuxième panneau (24).

8. Capteur de turbidité (10) selon la revendication 7,
**caractérisé en ce que** le premier capteur de rayonnement (32) est préchargé en direction du premier panneau (22) par une première force de précharge ou/et **en ce que** le deuxième capteur de rayonnement (62) est préchargé en direction du deuxième panneau (24) par une deuxième force de précharge.

9. Capteur de turbidité (10) selon la revendication 8,
**caractérisé en ce que** le premier capteur de rayonnement (32) est logé dans un premier ensemble de capteur de rayonnement (28), le premier ensemble de capteur de rayonnement (28) étant scellé contre un premier élément de boîtier (38) du boîtier de capteur (16) par un premier élément d'étanchéité (42), le premier élément d'étanchéité (42) fournissant la première force de précharge.

10. Capteur de turbidité (10) selon l'une des revendications 8 ou 9,
**caractérisé en ce que** le deuxième capteur de rayonnement est logé dans un deuxième ensemble de capteur de rayonnement (60), le deuxième ensemble de capteur de rayonnement (60) étant scellé contre un deuxième élément de boîtier (16b) du boîtier de capteur (16) par un deuxième élément d'étanchéité (70), le deuxième élément d'étanchéité (70) fournissant la deuxième force de précharge.

11. Capteur de turbidité (10) selon la revendication 10,
**caractérisé en ce que** le deuxième ensemble de capteur de rayonnement (60) contient également la source de rayonnement (54).

12. Capteur de turbidité (10) selon la revendication 11,
**caractérisé en ce que** la source de rayonnement (54) est en engagement d'appui avec le deuxième composant d'étanchéité (70), de sorte que le composant d'étanchéité (70) précharge directement la source de rayonnement (54) vers le deuxième panneau (24).

13. Capteur de turbidité (10) selon l'une quelconque des revendications précédentes, en incluant la revendication 7,
**caractérisé en ce que** le boîtier de capteur (16) s'étend avec sa plus grande dimension le long d'un axe longitudinal (L), le premier (22) et le deuxième panneau (24) étant respectivement reçus sur le boîtier de capteur (16) orientés transversalement à l'axe longitudinal (L).

14. Ensemble capteur de turbidité (76, 79) comprenant un capteur de turbidité (10) selon la revendication 13, et un premier corps d'étalonnage (74) pour étalonner le capteur de turbidité (10),
**caractérisé en ce que** le premier corps d'étalonnage (74) peut être relié de manière amovible au boîtier de capteur (16) de telle sorte que, dans un premier état de fonctionnement prêt à l'étalonnage de l'ensemble capteur de turbidité (76, 79), le premier corps d'étalonnage (74) contribue au moins à un blindage de la zone de détection de fluide (14) contre un rayonnement de lumière provenant de l'environnement extérieur (U) de l'ensemble capteur de turbidité (76, 79), le premier capteur de rayonnement (32) pouvant être atteint dans le premier état de fonctionnement prêt à l'étalonnage pour le rayonnement émis par la source de rayonnement (54).

15. Ensemble capteur de turbidité (76, 79), notamment selon la revendication 14, comprenant un capteur de turbidité (10) selon la revendication 13, et un deuxième corps de calibration (80) pour calibrer le capteur de turbidité (70),
**caractérisé en ce que** le deuxième corps d'étalonnage (80) peut être relié de manière amovible au boîtier de capteur (16) de telle sorte que, dans un deuxième état de fonctionnement prêt à l'étalonnage de l'ensemble capteur de turbidité (76, 79), le deuxième corps d'étalonnage (80) contribue à un blindage de la zone de détection de fluide (14) contre un rayonnement de lumière provenant de l'environnement extérieur (U) de l'ensemble capteur de turbidité (76, 79), le deuxième corps d'étalonnage (80) comprenant une formation de blocage (82) qui, dans le deuxième état de fonctionnement prêt à l'étalonnage, est disposée entre le premier (32) et le deuxième capteur de rayonnement (62) et blinde le premier capteur de rayonnement (32) contre le rayonnement émis par la source de rayonnement (52).
